# EUROPEAN PATENT SPECIFICATION

(11) **EP 0 589 393 B1**
(45) Date of publication and mention of the grant of the patent: **12.12.2001**
(21) Application number: 93115112.0
(22) Date of filing: 20.09.1993
(51) Int. Cl.: B01D 53/62, B01J 23/58, B01J 23/89

(54) **Method for purifying oxygen rich exhaust gas**
Verfahren zur Reinigung von sauerstoffreichem Abgas
Procédé pour purifier un gaz d'échappement riche en oxygène

(30) Priority: 21.09.1992 JP 25136092; 29.12.1992 JP 36146892
(43) Date of publication of application: 30.03.1994
(73) Proprietor: TOYOTA JIDOSHA KABUSHIKI KAISHA, Aichi-ken (JP); CATALER INDUSTRIAL CO., LTD., Ogasa-gun, Shizuoka-ken (JP)
(72) Inventor: Kanazawa, Takaaki, Toyota-shi, Aichi (JP); Matsumoto, Shinichi, Toyota-shi, Aichi (JP); Iguchi, Satoshi, Toyota-shi, Aichi (JP); Katoh, Kenji, Toyota-shi, Aichi (JP); Tanaka, Toshiaki, Toyota-shi, Aichi (JP); Takeshima, Shinichi, Toyota-shi, Aichi (JP); Tanizawa, Tsuneyuki, Toyota-shi, Aichi (JP); Kasahara, Koichi, c/o Cataler Ind. Co., Ltd., Ogasa-gun, Shizuoka (JP); Tateishi, Syuji, c/o Cataler Ind. Co., Ltd., Ogasa-gun, Shizuoka (JP); Muraki, Hideaki, Nagoya-shi, Aichi (JP)
(74) Representative: Leson, Thomas Johannes Alois, Dipl.-Ing.

(56) References cited:
- EP-A- 0 580 389
- EP-A- 0 582 917
- FR-A- 2 168 502
- US-A- 4 128 503

## Description

### BACKGROUND OF THE INVENTION

### 1. Field of the Invention

The present invention relates to a method for purifying an oxygen rich exhaust gas, and more specifically, it relates to a method for efficiently purifying the oxygen rich exhaust gas by removing nitrogen oxides (NOx) in the oxygen rich exhaust gas. The term "oxygen rich exhaust gas" means an exhaust gas containing oxygen in an amount exceeding the amount of oxygen necessary for completely oxidizing carbon monoxide, hydrocarbons, hydrogen and other reducible substances contained in the exhaust gas.

### 2. Description of the Related Art

In the past, there have been known as catalysts for purifying automotive exhaust gas many three-way catalysts for purifying exhaust gas which purify exhaust gas by simultaneously oxidizing the carbon monoxide (CO) and hydrocarbons (HC) in the exhaust gas and reducing nitrogen oxides (NOx) in the exhaust gas. Such typical catalysts are comprised of, for example, cordierite or other refractory carriers coated with a γ-alumina slurry, calcined, then made to carry a noble metal such as Pd, Pt, and Rh.

The performance of such an exhaust gas purifying catalyst, however, largely depened upon an air-fuel (A/F) ratio set for the engine. In the case of a lean air-fuel mixture, that is, at the lean side with a large air-fuel ratio, the amount of oxygen in the exhaust gas after combustion increases, and therefore, the oxidation action becomes more active and the reduction action becomes inactive. Conversely, at the rich side with a small air-fuel ratio, the amount of oxygen in the exhaust gas after combustion decreases, and therefore, the oxidation action becomes inactive and the reduction action becomes more active. On the other hand, in recent years, automobiles have been made to be driven at the lean side as much as possible during ordinary driving so as to burn an oxygen rich air-fuel mixture and thereby meet with the demands for lower fuel consumption. A catalyst which can sufficiently remove NOx even at the lean side has therefore been desired.

The present inventors, under these circumstances, proposed as a catalyst for purifying automotive exhaust gas under oxygen rich atmospheres, a catalyst which would adsorb or absorb NOx at the time of an oxygen rich (i.e., lean) atmosphere and would reduce the nitrogen oxides (Nox) at the time of stoichiometric state or rich state and simultaneously perform the oxidation of the carbon monoxide (CO) and hydrocarbons (HC), for example, a Pt/Ba/Al₂O₃ catalyst comprised of platinum and barium supported on an alumina carrier (see Japanese Patent Application No. 4-130904). This catalyst, however, did not have a sufficient NOx purification rate after extensive use, even with an increase in the amount of the platinum and barium contents, and therefore, development of a practical exhaust gas purifying catalyst with a high durability has been desired.

As mentioned above, there are cases where a Pt/Ba/alumina catalyst lacks a practically sufficient NOx removal rate after extensive use. This is because the sulfur dioxide (SO₂) present in the exhaust gas to be treated, generated by the combustion of S in the fuel, reacts with the Ba and converts it to BaSO₄, which does not have the ability to adsorb or absorb NOx, whereupon the NOx removal rate is decreased. This phenomenon becomes marked in particular when performing high temperature durability tests.

A similar technology is disclosed in EP-A-0 580 389, a document according to Art. 54(3) EPC, namely an exhaust gas purification apparatus including an NOₓ absorbent comprising a carrier 6c, a noble metal catalyst 6a and an absorbing material 6b selected from alkaline earth metals, rare earth metals and alkaline metals. The constitution of such an NOₓ absorbent is shown in Fig. 3 and Fig. 4 of this disclosure.

Another document according to Art. 54(3) EPC is EP-A-0 582 917 which discloses an exhaust gas purification device including an NOₓ absorbent comprising on a carrier at least one substance selected from alkali metals, alkaline earth metals, rare earth metals and noble metals. For preventing poisoning of a catalyst, a sulfur trapping device has to be arranged in the exhaust passage upstream of the NOₓ absorbent.

Furthermore, US-A-4,128,503 discloses a catalyst for purifying exhaust and waste gases which is operated in the vicinity of theoretically stoichiometric air-fuel ratio. The catalyst consist essentially of phosphorus, barium, nickel as an oxide and at least one member selected from the group consisting of palladium and platinum and rhodium in elemental form. The catalyst is operated at an air-fuel ratio very close to stoichiometric air-fuel ratio. According to this disclosure, the NOₓ purification efficiency is sharply lower if the stoichiometric air-fuel ratio is changed to an oxygen-rich atmosphere.

### SUMMARY OF THE INVENTION

Accordingly, the objects of the present invention are to eliminate the above-mentioned disadvantages of the prior art and to provide a method for purifying an oxygen rich exhaust gas which can maintain a practically acceptable high purification rate even after extensive use at high temperatures.

In accordance with the present invention, there is provided a method for purifying an oxygen rich exhaust gas by simultaneously removing the carbon monoxide, hydrocarbons, and nitrogen oxides contained in the exhaust gas, which comprises the steps using an exhaust gas purifying catalyst as defined in claim 1.

### DESCRIPTION OF THE PREFERRED EMBODIMENTS

To improve the three-way activity, for the removal of HC, CO, NOx at stoichiometric state, of the catalyst according to the present invention, rhodium may be incorporated into the catalyst, in addition to Pt and/or Pd. The preferable ammount of the rhodium supported is 0.05 to 0.5 g/liter of the carrier.

As explained below, according to the method of purifying exhaust gas of the present invention, it is possible to remove, with a high efficiency, the CO, HC, and NOx in the oxygen rich, exhaust gas generated from a vehicle carrying a lean burn engine etc. Even in a transitory state (i.e., state simulating city driving) and even after extensive use of the catalyst.

The catalyst used in the method of the present invention uses, as active metal components, (i) platinum (Pt) and/or palladium (Pd), (ii) barium (Ba), and (iii) at least one metal selected from the group consisting of alkali metals (for example, Li, Na, K, Cs, etc.), which are supported on a porous carrier.

The porous carrier usable in the method of the present invention includes, for example alumina, zeolite, zirconia, silica alumina, silica, etc. There is no particular limitation on the type or physical properties of these porous carriers. Use may be made of any porous carrier used for catalysts in the past. Further, these porous carriers may be used coated on a honeycomb body comprised of cordierite, heat resistant metal alloys, etc.

The method for purifying exhaust gas according to the present invention uses a catalyst comprised of (i) platinum and/or palladium, (ii) barium, and (iii) at least one metal selected from the group consisting of alkali metals (hereinafter sometimes referred to as the "third metal component") supported on the above-mentioned porous carrier. Among these metals, the amount of platinum or palladium supported is preferably 0.1 to 10.0 g/liter of the carrier. When platinum and palladium are used together, the total amount is preferably 0.1 to 10.0 g/liter. When the amount of platinum or palladium supported is less than 0.1 g/liter, sometimes there is a case where a sufficient catalytic activity is not obtained. Further, when the amount is more than 10.0 g/liter, even if the amount of the platinum or palladium supported is increased, only grain growth of the platinum or palladium is promoted, and therefore, there is no substantial contribution to the improvement of the catalytic activity, and only the cost becomes higher. It is particularly preferable in terms of the catalytic activity and cost when the amount of the platinum or palladium supported is 0.5 to 3.0 g/liter.

The amount of the barium supported in the catalyst used in the present invention is preferably 0.05 to 10.0 mol/liter of the carrier. When the amount of the barium supported is less than 0.05 mol/liter, sometimes, there is a case where a sufficient NOx removal rate cannot be obtained, while when the amount is more than 10.0 mol/liter, sometimes, there is a case where the surface area of the carrier is reduced. More preferably, the amount supported is 0.15 mol/liter to 1.0 mol/liter.

The amount of the third metal component supported on the catalyst used in the present invention is preferably 0.02 to 10.0 mol/liter of the carrier. When the amount supported is less than 0.02 mol/liter, sometimes there is a case wherein a sufficient NOx removal rate cannot be obtained, while when the amount is more than 10.0 mol/liter, sometimes there is a case where the surface area of the carrier is reduced. More preferably, the amount is 0.05 mol/liter to 1.0 mol/liter.

The method for producing the exhaust gas purifying catalyst used in the present invention is not particularly limited, but it is desirable to produce a catalyst in such a method that Ba, an alkali metal such as K forms the solid solution or the complex oxide thereof. In any case, the catalyst has a structure wherein the platinum and/or palladium are bonded in a highly dispersed state. For example, a suitable porous carrier is immersed in a slurry containing alumina prepared in accordance with a conventional method so as to coat the carrier with alumina, and thereafter, is dried and calcined at a temperature of, for example, 500 to 700°C, followed by immersing in an aqueous solution of a platinum compound such as dinitrodiammine platinum or tetraammine platinum chloride and/or an aqueous solution of a palladium compound such as palladium nitrate or palladium chloride, and is then dried and calcined at a temperature of, for example, 200 to 500°C, whereby the porous carrier is made to support the platinum and/or palladium thereon. Next, the above-mentioned carrier supporting platinum and/or palladium is immersed in an aqueous mixed solution of an aqueous solution of a barium compound such as barium acetate and an aqueous solution of an alkali metal compound is then dried and calcined at a temperature of, for example, 500 to 700°C so as to cause the Ba, alkali metals and the platinum and/or palladium to be supported on the carrier in a highly dispersed bonded state.

When purifying exhaust gas in accordance with the method for purifying an exhaust gas according to the present invention, the location where the catalyst is placed in the exhaust gas passage of the engine is not particularly limited, but, for example, it is preferable to place it under the floor of the vehicle, directly under the engine, etc. Further, the catalyst according to the present invention may be used in combination with a conventional three-way catalyst.

In the purification method according to the present invention, the space velocity (SV) at which the exhaust gas is introduced into the catalyst layer is not particularly limited, but the use of a range of 300,000 hr⁻¹ or less is preferable.

The mechanism by which the method for purifying exhaust gas according to the present invention and the exhaust gas purifying catalyst used for the same exhibit their superior exhaust gas purifying effect is still not necessarily clear, but is believed to be as follows, without prejudice:

According to the present invention, when use is made of a catalyst comprising (i) platinum and/or palladium, (ii) barium, and (iii) the above-mentioned third metal component supported on a porous carrier and the catalyst is placed in the exhaust passage of a lean burn internal combustion engine, and then, as shown in the following examples as well, it is possible to remove the CO, HC, and NOx at a high efficiency during the driving of a vehicle and further the rate of removal of NOx after a durability test of the catalyst is good as well.

The structure of the catalyst used in the method for purifying exhaust gas according to the present invention may, for example, be (i) platinum and/or palladium, (ii) barium, and (iii) the above-mentioned third metal component supported on the surface of a porous carrier such as alumina in a highly dispersed state. The catalyst of this structure is envisioned as acting as follows in the face of changes in the composition of the engine exhaust gas during driving of a vehicle.

When the atmosphere on the catalyst is an oxidizing atmosphere (lean), a portion of NOx contained in the exhaust gas is reduced to N₂ by HC on the Pt and/or Pd. The majority of the NOx, however, spills over from the Pt and/or Pd and is adsorbed or absorbed in the basic barium, potassium or other alkali metal, and composite products thereof.

When the atmosphere on the catalyst is a state near the stoichiometric air-fuel ratio, for example, 1) when the lean burn engine is in an idling state, 2) during vehicle speed acceleration, or 3) the atmosphere on the catalyst is forcibly made the stoichiometric air-fuel ratio or a reducing atmosphere (when adding a reducing agent upstream side of the catalyst), the NOx which had mainly been adsorbed or absorbed on the catalyst by the Ba or third metal component moves on the Pt (i.e., reverse spill over) and reacts with a reducing gas (CO, H₂, HC) in the exhaust gas, whereby the NOx is reduced to N₂. At this time, the reducing gas is also oxidized and removed. By this mechanism, the NOx is either absorbed or removed by a reducing reaction. This is the characteristic feature of the catalyst used in the present invention.

On the other hand, in the exhaust gas, SO₂ is included due to the sulfur present in the fuel. With Ba alone, BaSO₄ and other compounds which do not have the ability to absorb NOx are produced by the SO₂, O₂, and H₂O in the exhaust, and therefore, the long-term durability becomes unsatisfactory. As opposed to this, by restoring (or causing coexistence) of the Ba and the above-mentioned third metal component (e.g., K) in the catalyst according to the present invention, sulfate (for example, K₂Ba(SO₄)₂ and other complex sulfates) are produced by the reaction with the SO₂ in the exhaust gas. These sulfates are broken down or reduced at low temperatures and enter a state of substances active against NOx, such as BaO, K₂O, BaK₂O₂. In this decomposed state, an effect of adsorption or absorption of NOx can be exhibited and the NOx removal rate can be kept high even after the extensive use at a high temperature. According to the present invention, by such a mechanism, it is believed that a long-term NOx absorbing ability is given and a high activity can be maintained. Further, due to this complexing, the particle size of the Ba, K, or the third metal component becomes fine and these are mixed with the Pt in a highly dispersed state. This is considered one of the complexing effects.

### EXAMPLES

The present invention will be explained in further detail below in accordance with the Examples, but the present invention is of course not limited to these Examples. In the following Examples, "parts" mean "parts by weight" unless otherwise indicated.

### Example 1

Honeycomb catalysts of different amounts of Pt/barium (Ba)/potassium (K)/alumina (Al₂O₃) were prepared and the NOx removing activities were evaluated.
a) Preparation of Alumina Slurry
   To 100 parts of alumina powder were added 70 parts of alumina sol (alumina content = 10% by weight), 15 parts of an aqueous 40% by weight solution of aluminum nitrate, and 30 parts of water. These components were agitated and mixed to prepare the coating slurry.
b) Coating and Calcining
   A cordierite honeycomb carrier was immersed in water and then the excess water was blown off. Then, the carrier was immersed in the slurry obtained in the above-mentioned a) and taken out therefrom. After this, the excess slurry was blown off, the carrier was then dried at a temperature of 80°C for 20 minutes, and at 600°C for one hour. The coating amount of alumina was 120g per liter of the honeycomb.
c) Supporting of Pt
   The honeycomb obtained in the above-mentioned manner was immersed in an aqueous solution of a predetermined concentration of dinitrodiammine platinum prepared so as to obtain the amount of Pt supported shown in Table 1. This was dried at 250°C to prepare the catalyst with the amount of Pt supported, shown in Table 1.
d) The above-mentioned carrier supporting platinum thereon was immersed in an aqueous mixed solution of an aqueous solution of barium acetate and an aqueous solution of potassium acetate of predetermined concentrations prepared so as to give the amounts of Ba and K supported shown in Table 1. This was dried, then calcined at 600°C for one hour to obtain the catalyst according to the present invention of, i.e., Catalyst Nos. 1 to 4 of Table 1.

As a Comparative catalyst, the catalyst of No. 5 not supporting potassium was also prepared by the method according to the preparation method of the catalyst of the present invention.

**Table 1.**

| Catalyst Prepared | | | |
|---|---|---|---|
| Catalyst No. | Amount supported | | |
| | K (mol/liter) | Ba (mol/liter) | Pt (g/liter) |
| 1 | 0.01 | 0.1 | 2.0 |
| 2 | 0.1 | 0.1 | 2.0 |
| 3 | 0.1 | 0.2 | 2.0 |
| 4 | 0.2 | 0.2 | 2.0 |
| 5 | 0 | 1.0 | 2.0 |

### Evaluation

The purification efficiencies of the above-mentioned catalysts were evaluated under the following conditions (evaluation of emission).

Each of the above-mentioned catalysts was placed in the exhaust gas passage of a vehicle provided with a lean burn engine (1.6 liter). The vehicle was run in the 10·15 mode to measure the NOx removal efficiency. The results are shown in Table 2.

In the durability test, the above-mentioned catalyst was placed in the exhaust passage of a lean burn engine (1.6 liter). The engine was operated at an A/F of 18 and an inlet gas temperature of 650°C for 50 hours.

**Table 2.**

| Results of Evaluation | | |
|---|---|---|
| Catalyst No. | Removal rate of initial product (%) | Removal efficiency of durability test product (%) |
| | NOx | NOx |
| 1 | 92 | 35 |
| 2 | 92 | 55 |
| 3 | 93 | 60 |
| 4 | 93 | 66 |
| 5 | 93 | 53 |

Except for using an aqueous solution of palladium nitrate instead of the aqueous solution of dinitrodiamine platinum, a honeycomb catalyst of Pd/Ba/K/Al₂O₃ was prepared in the same way as the honeycomb catalyst of Pt/Ba/K/Al₂O₃ of Example 1. The NOx removal activity was evaluated. The amounts of the components supported and the results are shown in Table 3.

**Table 3.**

| Results of Evaluation | | | | | |
|---|---|---|---|---|---|
| Catalyst No. | Amount supproted | | | NOx removal efficiency (%) | |
| | K∗¹ | Ba∗¹ | Pd∗² | Initial product | Durability test product |
| 1 | 0.01 | 0.1 | 2.0 | 90 | 36 |
| 2 | 0.1 | 0.1 | 2.0 | 92 | 53 |
| 3 | 0.1 | 0.2 | 2.0 | 91 | 51 |
| 4 | 0.2 | 0.2 | 2.0 | 92 | 60 |
| 5 | 0.0 | 1.0 | 2.0 | 92 | 48 |

| | | | | | |
|---|---|---|---|---|---|
| ∗¹: mol/liter | | | | | |
| ∗²: g/liter | | | | | |

### Reference Example 1 outside the scope of the present invention

Honeycomb catalysts of different amounts of Pt/barium/nickel/alumina were prepared and the NOx removal activities were evaluated.
a) Preparation of Alumina Slurry
   To 100 parts of alumina powder were added 70 parts of alumina sol (10% by weight content of alumina), 15 parts of a 40% by weight aqueous solution of aluminum nitrate, and 30 parts of water. These components were agitated and mixed to prepare the coating slurry.
b) Coating and Calcining
   A cordierite honeycomb carrier was immersed in water and then the excess water was blown off. Then, the carrier was immersed in the slurry obtained in the above-mentioned a) and taken out therefrom. Thereafter, the excess slurry was blown off, the carrier then was dried at a temperature of 80°C for 20 minutes, and at 600°C for one hour. The coating amount of alumina was 120g per liter of the honeycomb.
c) Supporting of Pt
   The honeycomb obtained in the above-mentioned manner was immersed in an aqueous solution of a predetermined concentration of dinitrodiammine platinum prepared to obtain the amount of Pt supported shown in Table 4. This was dried at 250°C to prepare the catalyst with the amount of Pt supported shown in Table 4.
d) The above-mentioned carrier supporting platinum was immersed in an aqueous mixed solution of an aqueous solution of barium acetate and an aqueous solution of nickel acetate of predetermined concentrations prepared so as to give the amounts of Ba and Ni supported shown in Table 4. This was dried, then calcined at 600°C for one hour to obtain the catalyst of the Catalyst Nos. 1 to 4 according to the present invention, shown in Table 4.

As a Comparative catalyst, the catalyst No. 5 was prepared at the same time in the same method according to the preparatin of the catalyst of the present invention.

**Table 4.**

| Catalyst Prepared | | | |
|---|---|---|---|
| Catalyst No. | Amount supported | | |
| | Ni (mol/liter) | Ba (mol/liter) | Pt (g/liter) |
| 1 | 0.01 | 0.1 | 2.0 |
| 2 | 0.1 | 0.1 | 2.0 |
| 3 | 0.1 | 0.2 | 2.0 |
| 4 | 0.2 | 0.2 | 2.0 |
| 5 | 0 | 1.0 | 2.0 |

### Evaluation

The purification efficiencies of the above-mentioned catalysts were evaluated under the following conditions (evaluation of emission).

Each of the above-mentioned catalyst was placed in the exhaust gas passage of a vehicle provided with a lean burn engine (1.6 liter). This was run in the 10·15 mode to measure the removal efficiency of NOx. The results are shown in Table 5.

For the used catalyst, the above-mentioned catalyst was placed in the exhaust gas passage of a lean burn engine (1.6 liter). The engine was operated at an A/F of 18 and an inlet gas temperature of 650°C for 50 hours.

**Table 5.**

| Results of Evaluation | | |
|---|---|---|
| Catalyst No. | Purification rate of initial product (%) | Purification rate of durability test product (%) |
| | NOx | NOx |
| 1 | 92 | 30 |
| 2 | 92 | 55 |
| 3 | 93 | 57 |
| 4 | 93 | 63 |
| 5 | 93 | 53 |

### Example 4

Honeycomb catalysts of different amounts of Pt/Ba/Cs/Al₂O₃ were prepared in the same manner as in Example 1 and the NOx removal activities were evaluated in the same manner as in Example 1. The amounts of the components supported and the results are shown in Table 6.

**Table 6.**

| Catalyst No. | Amount supported | | | NOx removal efficiency (%) | |
|---|---|---|---|---|---|
| | Cs∗¹ | Ba∗¹ | Pt∗² | Initial product | Durability test product |
| 1 | 0.01 | 0.1 | 2.0 | 93 | 35 |
| 2 | 0.1 | 0.1 | 2.0 | 92 | 57 |
| 3 | 0.1 | 0.2 | 2.0 | 94 | 60 |
| 4 | 0.2 | 0.2 | 2.0 | 94 | 68 |
| 5 | 10.0 | 0.1 | 2.0 | 72 | 21 |
| 6 | 11.0 | 0.1 | 2.0 | 52 | 19 |

| | | | | | |
|---|---|---|---|---|---|
| ∗¹: mol/liter | | | | | |
| ∗²: g/liter | | | | | |

### Example 5

Honeycomb catalysts of different amounts of Pt/Ba/Li/Al₂O₃ were prepared in the same manner as in Example 1 and the NOx removal activities were evaluated in the same manner as in Example 1. The amounts of the components supported and the results are shown in Table 7.

**Table 7**

| Catalyst No. | Amount supported | | | NOx removal efficiency (%) | |
|---|---|---|---|---|---|
| | Li∗¹ | Ba∗¹ | Pt∗² | Initial product | Durability test product |
| 1 | 0.01 | 0.1 | 2.0 | 91 | 28 |
| 2 | 0.1 | 0.1 | 2.0 | 93 | 59 |
| 3 | 0.1 | 0.2 | 2.0 | 93 | 64 |
| 4 | 0.2 | 0.2 | 2.0 | 94 | 66 |
| 5 | 10.0 | 0.1 | 2.0 | 79 | 23 |
| 6 | 11.0 | 0.1 | 2.0 | 61 | 21 |

| | | | | | |
|---|---|---|---|---|---|
| ∗¹: mol/liter | | | | | |
| ∗²: g/liter | | | | | |

### Example 6

Honeycomb catalysts of different amounts of Pt/Ba/Na/Al₂O₃ were prepared in the same manner as in Example 1 and the NOx removal activities were evaluated in the same manner as in Example 1. The amounts of the components supported and the results are shown in Table 8.

**Table 8**

| Catalyst No. | Amount supported | | | NOx removal efficiency (%) | |
|---|---|---|---|---|---|
| | Na∗¹ | Ba∗¹ | Pt∗² | Initial product | Durability test product |
| 1 | 0.1 | 0.1 | 2.0 | 92 | 58 |
| 2 | 0.1 | 0.2 | 2.0 | 94 | 62 |
| 3 | 0.2 | 0.2 | 2.0 | 94 | 68 |

| | | | | | |
|---|---|---|---|---|---|
| ∗¹: mol/liter | | | | | |
| ∗²: g/liter | | | | | |

### Reference Example 2 outside the scope of the present invention

Honeycomb catalysts of different amounts of Pt/Ba/Fe/Al₂O₃ were prepared in the same manner as in Example 1 and the NOx removal activities were evaluated in the same manner as in Example 1. The amounts of the components supported and the results are shown in Table 9.

**Table 9**

| Catalyst No. | Amount supported | | | NOx removal efficiency (%) | |
|---|---|---|---|---|---|
| | Fe^{*1} | Ba^{*1} | Pt^{*2} | Initial product | Durability test product |
| 1 | 0.1 | 0.1 | 2.0 | 90 | 57 |
| 2 | 0.1 | 0.2 | 2.0 | 92 | 55 |
| 3 | 0.2 | 0.2 | 2.0 | 91 | 62 |

| | | | | | |
|---|---|---|---|---|---|
| ^{*1}: mol/liter | | | | | |
| ^{*2}: g/liter | | | | | |

### Reference Example 3 outside the scope of the present invention

Honeycomb catalysts of different amounts of Pt/Ba/Co/Al₂O₃ were prepared in the same manner as in Example 1 and the NOx removal activities were evaluated in the same manner as in Example 1. The amounts of the components supported and the results are shown in Table 10.

**Table 10**

| Catalyst No. | Amount supported | | | NOx removal efficiency (%) | |
|---|---|---|---|---|---|
| | Co∗¹ | Ba∗¹ | Pt∗² | Initial product | Durability test product |
| 1 | 0.1 | 0.1 | 2.0 | 92 | 56 |
| 2 | 0.1 | 0.2 | 2.0 | 92 | 55 |
| 3 | 0.2 | 0.2 | 2.0 | 93 | 64 |

| | | | | | |
|---|---|---|---|---|---|
| ∗¹: mol/liter | | | | | |
| ∗²: g/liter | | | | | |

From the above-mentioned results, it is clear that with the method for purifying exhaust gas according to the present invention, there is little deterioration in the removal of the NOx exhausted from a vehicle provided with a lean burn engine, even after use and so the exhaust gas can be efficiently purified. In particular, the amount of the Ba supported is preferably 0.15 to 1.0 mol/liter, the amount of the K or Ni or other third metal component supported is 0.05 to 1.0 mol/liter, and the amount of the platinum and/or palladium supported is 0.5 to 7.0 g/liter.

### Reference Example 4 outside the scope of the present invention

Honeycomb catalysts of different amounts of Pt/Ba/Mg/Al₂O₃ were prepared in the same manner as in Example 1 and the NOx removal activities were evaluated in the same manner as in Example 1. The amounts of the components supported and the results are shown in Table 11.

**Table 11**

| Catalyst No. | Amount supported | | | | NOx removal efficiency (%) | |
|---|---|---|---|---|---|---|
| | Mg∗¹ | Ba∗¹ | Pt∗² | Rh∗² | Initial product | Durability test product |
| 1 | 0.01 | 0.1 | 2.0 | - | 92 | 34 |
| 2 | 0.1 | 0.1 | 2.0 | - | 94 | 58 |
| 3 | 0.1 | 0.2 | 2.0 | - | 95 | 62 |
| 4 | 0.2 | 0.2 | 2.0 | - | 95 | 69 |
| 5 | 10.0 | 0.1 | 2.0 | - | 73 | 24 |
| 6 | 11.0 | 0.1 | 2.0 | 0.1∗³ | 58 | 19 |

| | | | | | | |
|---|---|---|---|---|---|---|
| ∗¹: mol/liter | | | | | | |
| ∗²: g/liter | | | | | | |
| ∗³: Carried from aqueous solution of rhodium nitrate | | | | | | |

### Reference Examples 5 outside the scope of the present invention

Honeycomb catalysts of different amounts of Pt/Ba/Mg/Al₂O₃ were prepared in the same manner as in Example 1 and the NOx removal activities were evaluated in the same manner as in Example 1. The amounts of the components supported and the results are shown in Table 12.

**Table 12**

| Catalyst No. | Amount supported | | | | NOx removal efficiency (%) | |
|---|---|---|---|---|---|---|
| | Mg∗¹ | Ba∗¹ | Pt∗² | Rh∗² | Initial product | Durability test product |
| 1 | 0.01 | 0.1 | 2.0 | - | 90 | 32 |
| 2 | 0.1 | 0.1 | 2.0 | - | 92 | 53 |
| 3 | 0.1 | 0.2 | 2.0 | - | 92 | 51 |
| 4 | 0.2 | 0.2 | 2.0 | - | 90 | 62 |
| 5 | 0.0 | 1.0 | 2.0 | 0.1∗³ | 92 | 46 |

| | | | | | | |
|---|---|---|---|---|---|---|
| ∗¹: mol/liter | | | | | | |
| ∗²: g/liter | | | | | | |
| ∗³: Carried from aqueous solution of rhodium nitrate | | | | | | |

In actual operation, cars are repeatedly accelerated and decelerated. To handle the exhaust gas produced under these circumstances, according to the present invention, the electron state of the Pt and/or Pd is controlled by the barium, the alkali metals, whereby it is possible to improve the reactivity with the HC and NOx and further it is possible to use the NO adsorbing characteristic of barium, potassium and other alkali metals to greatly improve the NOx removal efficiency at acceleration and deceleration. Therefore, it is clear that the CO and HC in oxygen rich exhaust gas can be sufficiently removed, and therefore, the nitrogen oxides in the same exhaust gas can be efficiently removed.

## Claims

1. A method for effectively purifying an oxygen rich exhaust gas from a lean burn engine comprising sulfur oxides, carbon monoxides, hydrocarbons, and nitrogen oxides, said method comprising: simultaneously removing the carbon monoxide, hydrocarbons, and nitrogen oxides by bringing the exhaust gas from the lean burn engine into contact with an exhaust gas purifying catalyst comprising:
(i) at least one noble metal selected from the group consisting of platinum and palladium,
(ii) barium, and
(iii) at least one metal selected from the group consisting of elements of alkali metals, supported on a carrier composed of a porous substance,
wherein a majority of the nitrogen oxides in the exhaust gas are absorbed into the barium component on the porous support under a lean burn atmosphere, wherein an oxygen rich atmosphere is adjusted and said adsorbed nitrogen oxides are released and chemically reduced by a reaction with said hydrocarbons and carbon monoxide in the exhaust gas under a state near the stoichiometric air-fuel ratio or a reducing atmosphere, in which oxygen concentrations are below the stoichiometric point
**characterized in that**
the components (i), (ii) and (iii) are supported on the carrier in a highly dispersed bonded state, and
wherein at oxygen concentrations below the stoichiometric point the sulfur oxides react to form composite sulfates that decompose at temperatures sufficiently low to avoid poisoning the catalyst.

2. A method as claimed in claim 1, whrein said carrier is selected from the group consisting of alumina, zeolite, zirconia, silica alumina, and silica.

3. A method as claimed in claim 1, wherein the amount of the noble metal (i) supported is 0.1 to 10.0 g/liter of the carrier.

4. A method as claimed in claim 1, wherein the amount of the barium (ii) supported is 0.05 to 10.0 mol/liter of the carrier.

5. A method as claimed in claim 1, wherein the amount of the metal (iii) supported is 0.02 to 10.0 mol/liter of the carrier.

6. A method as claimed in claim 1, wherein rhodium is further included in the catalyst.

7. A method as claimed in claim 6, wherein the amount supported of the rhodium is 0.05 to 0.5 g/liter of the catalyst.

## Patentansprüche

1. Verfahren zur effektiven Reinigung eines sauerstoffreichen Abgases aus einem Magerverbrennungsmotor, welches Schwefeloxide, Kohlenstoffmonoxid, Kohlenwasserstoffe und Stickstoffoxide umfasst, wobei das Verfahren das Folgende umfasst: gleichzeitiges Entfernen von Kohlenstoffmonoxid und der Kohlenwasserstoffe und Stickstoffoxide durch Kontaktieren des Abgases aus dem Magerverbrennungsmotor mit einem Abgasreinigungs-Katalysator, der das Folgende umfasst:
(i) wenigstens ein Edelmetall, das aus der aus Platin und Palladium bestehenden Gruppe ausgewählt ist,
(ii) Barium, und
(iii) wenigstens ein Metall, das aus der aus den Elementen der Alkalimetalle bestehenden Gruppe ausgewählt ist, welches auf einem aus einer porösen Substanz bestehenden Träger geträgert ist,
wobei ein Hauptteil der Stickstoffoxide in dem Abgas in der Bariumkomponente auf dem porösen Träger unter einer Magerverbrennungsatmosphäre absorbiert wird, wobei eine sauerstoffreiche Atmosphäre eingestellt ist, und die adsorbierten Stickstoffoxide freigesetzt und durch eine Reaktion mit den Kohlenwasserstoffen und Kohlenstoffmonoxid in dem Abgas unter einer Atmosphäre, die nahe dem stöchiometrischen Luft-Kraftstoff-Verhältnis liegt, oder einer reduzierenden Atmosphäre, in der die Sauerstoffkonzentrationen unterhalb des stöchiometrischen Punkts liegen, chemisch reduziert werden,
**dadurch gekennzeichnet, dass**
die Komponenten (i), (ii) und (iii) auf dem Träger in einem hochdispergierten gebundenen Zustand geträgert vorliegen, und
wobei bei Sauerstoffkonzentrationen unterhalb des stöchiometrischen Punkts die Schwefeloxide zur Erzeugung von Kompositsulfaten abreagieren, die sich bei genügend niedrigen Temperaturen zur Vermeidung der Katalysatorvergiftung zersetzen.

2. Verfahren gemäß Anspruch 1, wobei der Träger aus der aus Aluminiumoxid, Zeolith, Zirkoniumoxid, Siliziumoxid-Aluminiumoxid und Siliziumoxid bestehenden Gruppe ausgewählt ist.

3. Verfahren gemäß Anspruch 1, wobei die Menge des geträgerten Edelmetalls (i) bei 0,1 bis 10,0 g/Liter des Trägers liegt.

4. Verfahren gemäß Anspruch 1, wobei die Menge des geträgerten Bariums (ii) bei 0,05 bis 10,0 mol/Liter des Trägers liegt.

5. Verfahren gemäß Anspruch 1, wobei die Menge des geträgerten Metalls (iii) bei 0,02 bis 10,0 mol/Liter des Trägers liegt.

6. Verfahren gemäß Anspruch 1, wobei des weiteren Rhodium in dem Katalysator eingeschlossen ist.

7. Verfahren gemäß Anspruch 6, wobei die geträgerte Menge an Rhodium bei 0,05 bis 0,5 g/Liter des Katalysators liegt.

## Revendications

1. Un procédé pour purifier efficacement un gaz d'échappement riche en oxygène provenant d'un moteur à combustion pauvre comprenant des oxydes de soufre, du monoxyde de carbone, des hydrocarbures, et des oxydes d'azote, ledit procédé comprenant les étapes consistant à : éliminer simultanément le monoxyde de carbone, les hydrocarbures, et les oxydes d'azote en mettant le gaz d'échappement provenant du moteur à combustion pauvre en contact avec un catalyseur de purification de gaz d'échappement comprenant :
(i) au moins un métal noble choisi dans le groupe constitué du platine et du palladium,
(ii) du baryum, et
(iii) au moins un métal choisi dans le groupe constitué des éléments des métaux alcalins, supporté sur un support composé d'une substance poreuse,
dans lequel une majorité des oxydes d'azote contenus dans le gaz d'échappement est absorbée dans le composant de baryum sur le support poreux dans une atmosphère de combustion maigre, dans lequel une atmosphère riche en oxygène est ajustée et lesdits oxydes d'azote adsorbés sont libérés et chimiquement réduits par une réaction avec lesdits hydrocarbures et monoxyde de carbone contenus dans le gaz d'échappement à un état proche du rapport stoechiométrique air-combustible ou une atmosphère réductrice, dans laquelle les concentrations d'oxygène sont inférieures au point stoechiométrique,
**caractérisé en ce que**
les composants (i), (ii) et (iii) sont supportés sur le support dans un état lié très dispersé, et
dans lequel à des concentrations d'oxygène inférieures au point stoechiométrique les oxydes de soufre réagissent pour former des sulfates composites qui se décomposent à des températures suffisamment basses pour éviter l'empoisonnement du catalyseur.

2. Un procédé selon la revendication 1, dans lequel ledit support est choisi dans le groupe constitué de l'alumine, de la zéolithe, de l'oxyde de zirconium, de la silice-alumine, et de la silice.

3. Un procédé selon la revendication 1, dans lequel la quantité de métal noble (i) supportée est de 0,1 à 10,0 g/litre de support.

4. Un procédé selon la revendication 1, dans lequel la quantité de baryum (ii) supportée est de 0,05 à 10,0 moles/litre de support.

5. Un procédé selon la revendication 1, dans lequel la quantité de métal (iii) supportée est de 0,02 à 10,0 moles/litre de support.

6. Un procédé selon la revendication 1, dans lequel du rhodium est, en outre, contenu dans le catalyseur.

7. Un procédé selon la revendication 6, dans lequel la quantité supportée de rhodium est de 0,05 à 0,5 g/litre de catalyseur.
